# EUROPÄISCHE PATENTSCHRIFT

(11) **EP 0 506 649 B1**
(45) Veröffentlichungstag und Bekanntmachung des Hinweises auf die Patenterteilung: **19.04.1995**
(21) Anmeldenummer: 92890064.6
(22) Anmeldetag: 19.03.1992
(51) Int. Cl.: G01B 5/00, G01D 5/26

(54) **Längenmesssystem**
Length measuring system
Dispositif de mesure de longueurs

(30) Priorität: 25.03.1991 AT 650/91; 30.04.1991 AT 897/91
(43) Veröffentlichungstag der Anmeldung: 30.09.1992
(73) Patentinhaber: RSF-Elektronik Gesellschaft m.b.H., A-5121 Tarsdorf 93 (AT)
(72) Erfinder: Rieder, Heinz, A-5110 Oberndorf (AT); Schwaiger, Max, A-5121 Ostermiething (AT)
(74) Vertreter: Hübscher, Heiner, Dipl.-Ing.

(56) Entgegenhaltungen:
- EP-A- 0 097 771
- US-A- 4 569 137

## Beschreibung

Die Erfindung betrifft ein Längenmeßsystem nach dem Oberbegriff des Patentanspruches 1.

Durch eine derartige grundsätzliche Ausgestaltung des Längenmeßsystems soll erreicht werden, daß der Maßstabkörper keinen unerwünschten Kräften bzw. Verformungen durch Wärmedehnungskräfte ausgesetzt wird und möglichst keine Verlagerungen eines an einem Ende oder in der Mitte des Maßstabes vorgesehenen, bei Inkrementalmeßsystemen z.B. durch eine Referenzmarke bestimmten Maßstabbezugspunktes gegenüber einem zugeordneten Bezugspunkt des Objektes, z.B. dem Meß-Nullpunkt einer Werkzeugmaschine auftreten.

Aus der DE-A 17 37 403 ist es bekannt, den Maßstabträger mit Hilfe von Schrauben am Maschinenbett zu befestigen, wobei die Schrauben durch im Durchmesser größere Bohrungen des Maßstabträgers geführt und der Durchmesserunterschied durch in die Bohrungen eingreifende, die Schrauben umschließende Buchsen aus gummielastischem Material ausgeglichen ist. Bei dieser Ausführung ist allerdings auch eine Verlagerung des Maßstabträgers und damit des Meßsystems quer zur Längsrichtung möglich, weshalb andere Ausgleichskonstruktionen bevorzugt werden. Nach der US-A 3 816 002 ist wenigstens das eine Ende des Maßstabträgers mit einem Langloch für die Durchführung einer im Lochbereich zu einem Paßstift verdickten Befestigungsschraube versehen und diese Befestigungsschraube drückt über eine Spiralfeder oder eine Reihe von Tellerfedern mit ihrem Kopf gegen die Längsränder des Langloches, so daß der Maßstabträger sich bei Wärmeeinwirkungen in Richtung des Langloches ausdehnen bzw. zusammenziehen kann. Für die Befestigung des Maßstabkörpers ist es aus der DE-A 26 43 304 bekannt, den meist aus Glas bestehenden Maßstabkörper an dem Maßstabträger mittels eines Klebemittels hoher Elastizität zu befestigen, wobei der Maßstabkörper flach auf der dünnen Kleberbeschichtung aufliegt und im Bereich eines Bezugspunktes eine Fixierung des Maßstabkörpers durch ein Klebemittel geringer Elastizität vorgenommen werden kann. Aus der DE-A 28 53 771 ist es bekannt, Endabschlußblöcke für den rohrförmigen Maßstabträger, welche Durchführungsöffnungen für Befestigungsschrauben aufweisen, nicht unmittelbar starr mit den Enden des Maßstabträgers zu verbinden, sondern in dem zum Maßstabträger weisenden Ende des Befestigungsblockes mäanderförmige, von oben und unten geführte Einschnitte vorzusehen, um so Schwachstellen zu erzeugen, nach denen eine Längsverstellung des Maßstabträgers gegenüber den starr anzubringenden Befestigungsblöcken ermöglicht wird. Nachteilig ist hier, daß sich für die Schwachstellen ein zusätzlicher Platzbedarf in Maßstablängsrichtung ergibt, wobei keine einwandfreie Führung des Maßstabträgers ausschließlich in Längsrichtung gewährleistet ist und auch nicht die Möglichkeit besteht, die Endblöcke mit abgedichtet in die Rohröffnung des Maßstabträgers eingreifenden Ansätzen zum hermetischen Abschluß des Trägerinnenraumes an den Enden auszustatten. Andere Möglichkeiten der Ausbildung des wieder an Endbefestigungselementen ausgebildeten Längenausgleichselementes sind zusätzliche Federelemente, Federgelenke, miteinander federnd verbundene Winkelstücke und die Verbindung zwischen Maßstabträger und Befestigungsblock herstellende Drehgelenke mit senkrecht zur Längsrichtung des Maßstabträgers verlaufenden Drehachsen. Es besteht immer die Gefahr einer unstabilen Gesamtkonstruktion, einer nicht ausreichend genauen Längsführung zwischen Maßstabkörper und Objekt, eine in vielen Fällen sehr unerwünschte Verlängerung der Gesamtkonstruktion durch die zusätzlichen Ausgleichselemente im Endbereich und ein ungünstiges Bewegungsverhalten bei der Erwärmung und Abkühlung. Vor allem bei großen Maßstablängen wird durch die bekannte durchgehende Befestigung mit einer dünnen, nachgiebigen Kleberschicht kein ausreichender Längenausgleich zwischen Maßstab und Trägerkörper gewährleistet, so daß ab einer bestimmten Länge, auf jeden Fall größenordnungsmäßig über 1 m Maßstablänge unerwünschte Verformungen bzw. Belastungen des Maßstabkörpers durch die Wärmedehnungskräfte auftreten.

Aufgabe der Erfindung ist es, hier Abhilfe zu schaffen und ein Längenmeßsystem anzugeben, das bei einfachem Aufbau einen sicheren Ausgleich der unterschiedlichen Wärmedehnung von Maßstab und Maßstabträger auch bei großen Maßstab- bzw. Meßsystemlängen gewährleistet, keine aufwendigen Elemente benötigt und auch keine unerwünschten Verlängerungen bzw. Aufbauten am Meßsystem erforderlich macht.

Die gestellte Aufgabe wird prinzipiell durch die Merkmalskombination des Patentanspruches 1 gelöst.

Im Rahmen der Erfindung sind verschiedenste, z.T. in den Unteransprüchen gekennzeichnete Ausführungsvarianten möglich. Bei der Veriante nach Anspruch 2 werden die Einschnitte im einfachsten Fall so angebracht, daß die Stege an der Vorderseite des Maßstabträgers bzw. Endabschlußblockes in den Mittelteil und im Bereich der Rückseite des Maßstabträgers bzw. Endabschlußblockes in das volle Material dieses Teiles übergehen oder umgekehrt. Es sind aber ohne weiteres auch Ausführungen möglich, bei denen die Stege durch versetzt angebrachte Einschnitte zwei- oder mehrmals zwischen Vorder- und Rückseite zick-zackförmig hinund herlaufen und so entsprechende Federelemente bilden, die aber, bedingt durch ihre Höhe, eine ausreichende Seitenstabilisierung bedingen, also nur Längsverstellungen, aber keine Querabweichungen des Trägers gegenüber den Befestigungsstellen zulassen.

Bei einer Ausführung gemäß Anspruch 3 können die die Ausgleichseinrichtungen bestimmenden Einschnitte und Vertiefungen Schwachstellen in einer zu einem Träger für den Maßstab verdickten Wand des rohrförmigen Schutzgehäuses bestimmen und es ist möglich, bei längeren Meßsystemen mehrere solcher Ausgleichseinrichtungen über die Länge des Maßstabträgers verteilt anzubringen, so daß dieser Maßstabträger an mehreren Stellen mit dem Objekt verbunden werden kann und dabei der erwünschte Längenausgleich bei Änderungen der Außentemperatur stattfinden kann. Zwischen den Befestigungsstellen behält der Träger seine volle Stabilität. Ein Teil des Längenausgleiches findet durch Verformung der Stege zwischen aufeinanderfolgenden Befestigungsstellen statt, so daß in der Gesamtheit gesehen geringere Längenänderungen des Maßstabträgers bei gegebenen Temperaturänderungen gegenüber vergleichbaren Meßeinrichtungen auftreten. Die Ausgleichseinrichtungen benötigen überdies keine zusätzlichen Auf- oder Anbauteile am Längenmeßsystem, um den Temperaturausgleich zu gewährleisten.

Die Ausführung, die in ihren Grundzügen in Anspruch 5 gekennzeichnet ist, hat den Vorteil, daß die benötigten Aufnahmeöffnungen in den Endabschlußblöcken eine einfache, leicht herstellbare Grundform aufweisen können und daß durch Verwendung verschieden steifer Einsatzteile ihre Charakteristik an die jeweiligen Bedürfnisse, z.B. Gewicht und Länge des Meßsystems und äußere Verhältnisse, angepaßt werden kann. Eine Verlängerung des Längenmeßsystems durch Anbringung der Ausgleichselemente ist nicht notwendig. Die Ausgleichselemente können so gestaltet werden, daß sie ein seitliches Spiel, also ein Abweichen des Trägerkörpers quer zur Längsrichtung verhindern.

Die Weiterbildung gemäß Anspruch 6 ermöglicht es, über das Langloch eine Justierung des Längenmeßsystems quer zur Längsrichtung vorzunehmen. Man kann aber auch einen über die Schraube festspannbaren Einsatzteil für das Langloch vorsehen, so daß über das Langloch und den Einsatzteil die Stabilität der Befestigung erhöht wird. Der Widerstand, den der Einsatzteil der Längsverstellung entgegenaetzt, hängt von der Dicke der Flansche und Stege, der Gesamtprofilform, dem Herstellungsmaterial und der freien Länge der Stege ab. Wenn die Stege mit ihren Längsenden in der hier an diese Länge angepaßten Aufnahmeöffnung abgestützt werden, erhöht sich die Querstabilität der Befestigung, so daß ein Ausweichen des Längenmeßsystems in Querrichtung auch bei Wärmedehnungen auszuschließen ist. Durch die Maßnahme nach Anspruch 7 wird erreicht, daß im Befestigungsbereich keine allenfalls zu einem Lockern der Schrauben führende Bewegungen der Stege wirksam werden können und eine satte Befestigung am Objekt gewährleistet bleibt.

Bei der Ausführungsvariante gemäß Anspruch 8 wird durch die Hülse ein ähnliches Verhalten wie von einem federnden Einsatzteil erzielt. Die Hülsenwandung kann an den Schmalseiten im Bereich der die Stege des Hutprofiles zur Hülse verbindenden Wandungen verdünnt oder mit einer wellenförmigen Profilierung versehen sein, um die Biegesteifigkeit in Längsrichtung des Meßsystems zu verringern.

Nach einer weiteren Ausgestaltung des Erfindungsgegenstandes gemäß Anspruch 9 wird im Gegensatz zur bekannten Befestigung des Maßstabes mit Hilfe einer Kleberschicht erreicht, daß die Bewehrung zumindest den größten Teil der bei der Längenänderung über das zwischen der Bewehrung und der Nutwand liegende gummielastische Material wirksam werdenden Kräfte aufnimmt, wobei die Bewehrung selbst keine oder nur ganz geringe Längenänderungen gegenüber dem Maßstab erfährt und deshalb über das zwischen Bewehrung und Maßstab liegende gummielastische Material keine oder nur sehr geringe Längskräfte wirksam werden können, weshalb es ohne weiteres möglich ist, auch Maßstäbe mit großer Länge im wesentlichen wärmespannungsfrei zu halten. Die zusätzliche Bewehrung überbrückt überdies die durch die Einschnitte und Vertiefungen in der Wand des rohrförmigen Schutzgehäuses bestimmten Schwachstellen und trägt damit zur Gesamtstabilität bei.

Eine bevorzugte Ausgestaltung ist im Anspruch 10 angegeben. Dabei ist es möglich, das Laminat vorzufertigen und erst beim Einbau mit der Nutwand und dem Maßstabkörper zu verbinden bzw. vor dem Einbau am Maßstabkörper anzubringen und mit seiner Hilfe dann den Maßstabkörper einzukleben. Nach einer ähnlichen, aber technisch schwierigeren Ausführung kann man in die Nut neben dem Maßstab auch das Metallband oder einen sonstigen Bewehrungskörper, z.B. einen Gitterstreifen, einlegen und den Zwischenraum zwischen Nutwand und Maßstabkörper unter Einbettung des Bewehrungskörpers mit ausvulkanisierendem Material ausfüllen.

Weitere Einzelheiten und Vorteile des Erfindungsgegenstandes entnimmt man der nachfolgenden Zeichnungsbeschreibung.

In der Zeichnung ist der Erfindungsgegenstand beispielsweise veranschaulicht. Es zeigen
- Fig. 1: in vereinfachter Darstellungsweise ein Teilstück eines mit einem Endabschlußblock versehenen rohrförmigen Maßstabträgers in Ansicht von hinten,
- Fig. 2: in größerem Maßstab ein Teilstück des Maßstabträgers im Bereich einer Ausgleichseinrichtung im Schaubild,

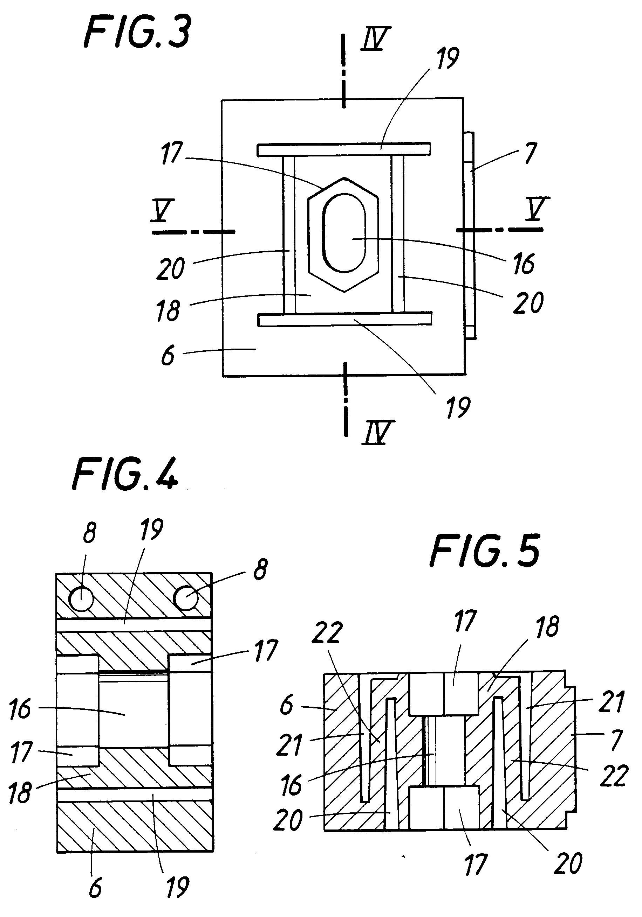

- Fig. 3: als Detail zu Fig. 1 den Endabschlußblock in größerem Maßstab in Ansicht,
- Fig. 4 und 5: Schnitte nach den Linien IV-IV bzw. V-V der Fig. 3,
- Fig. 6: in ebenfalls größerem Maßstab einen Querschnitt durch den rohrförmigen Maßstabträger mit einem nur in seinen Umrissen angedeuteten Maßstabkörper,
- Fig. 7: als Detail zu Fig. 6 den Befestigungsbereich des Maßstabkörpers im Schnitt,
- Fig. 8: in vereinfachter Darstellungsweise ein Teilstück eines mit einem Endabschlußblock versehenen rohrförmigen Maßstabträgers bei einer Ausführungsvariante in Vorderansicht und
- Fig. 9: einen Querschnitt durch den Endabschlußblock bei weggelassener Befestigungsschraube.

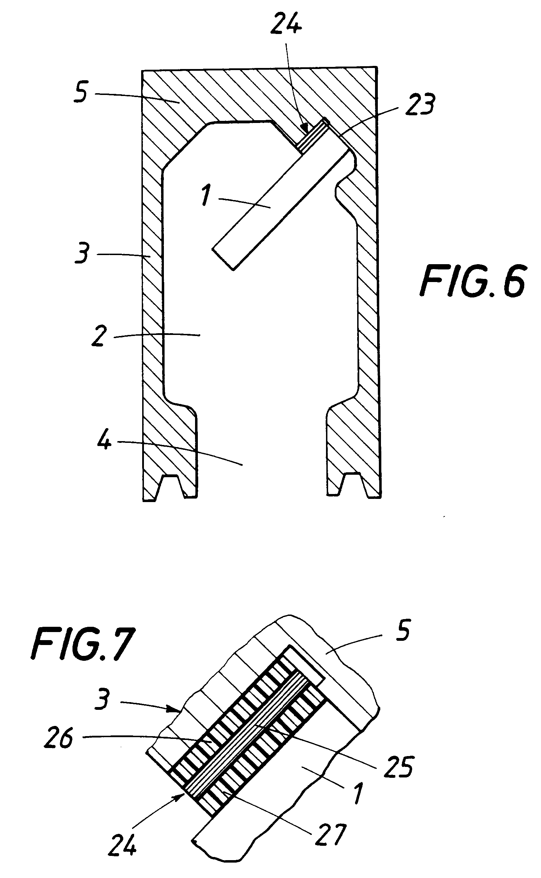

Das Längenmeßsystem besitzt einen nur in den Fig. 6 und 7 angedeuteten, z.B. aus Glas bestehenden Maßstabkörper 1, auf dem eine Inkrementale oder absolute Meßteilung angebracht ist, die von einer Abtasteinheit z.B. nach optoelektronischen Abtastprinzipien zur Erzeugung von Längenmeßsignalen abgetastet werden kann.

Die Abtasteinheit, ein Mitnehmer für die Abtasteinheit und die weiteren an sich bekannten Einrichtungen der Längenmeßeinrichtung wurden nicht dargestellt. Es wurden auch die meist vorhandenen Abdichtungen für die abgedichtete Durchführung eines Mitnehmerschwertes in den Innenraum 2 eines rohrförmiges Maßstabträgers 3, da an sich bekannt und üblich, nicht dargestellt.

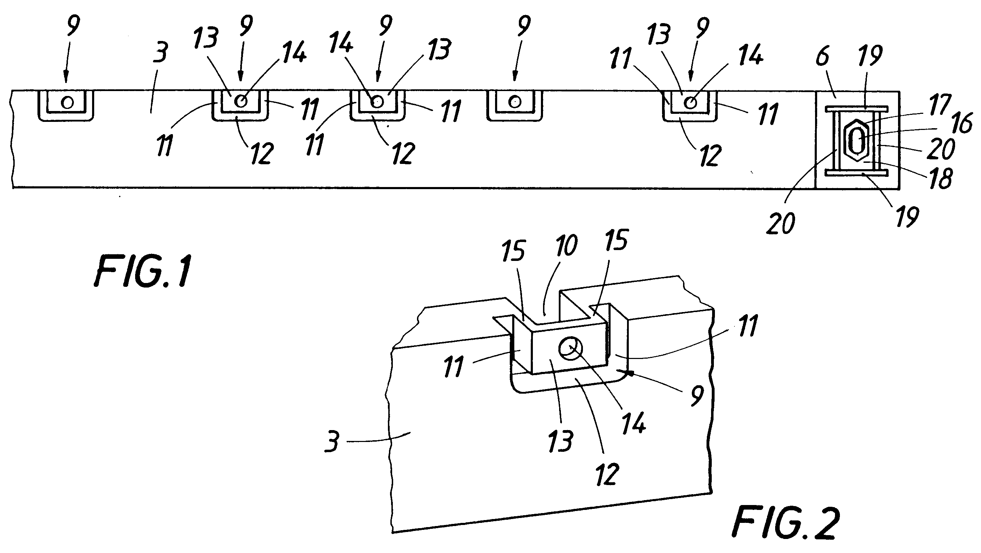

Der Maßstabträger 3 besitzt, wie erwähnt, die Grundform eines Rechteckrohres mit unterem Einführungsschlitz 4, wobei die dem Schlitz 4 gegenüber angebrachte obere Wand 5 des rohrförmigen Maßstabträgers zu einem Halteträger verdickt ist. An den Enden des Maßstabträgers 3 sind Endabschlußblöcke 6 vorgesehen, die einen in die Rohröffnung 2 passenden Ansatz 7 zum dichten Abschluß dieser Rohröffnung an den Rohrenden aufweisen und die mit dem Trägerkörper über durch Öffnungen 8 eingeführte Längsschrauben, die in den Trägerteil 5 eingreifen, und bzw. oder durch Verklebung den Ansatz umschließende Silikondichtungen u.dgl. verbunden werden können. Der Maßstabträger 3 wird an einem Objekt, z.B. am Bett einer Werkzeugmaschine mit Hilfe von Befestigungsschrauben befestigt. In Fig. 1 ist eine Möglichkeit angedeutet, bei der der Maßstabträger 3 sowohl selbst mit Hilfe von Befestigungsschrauben befestigt werden kann, als auch die Möglichkeit besteht, den Maßstabträger mit Hilfe von durch die Endblöcke 6 eingeführten, noch näher zu beschreibenden Schrauben am Bett zu befestigen. Eine der Befestigungsstellen 9 des Maßstabträgerkörpers 3 kann ein nicht dargestelltes, lediglich durch eine Querbohrung im Trägerteil 5 bestimmtes Festlager sein.

Die übrigen Befestigungsstellen 9 sind mit Ausgleichseinrichtungen versehen, welche bei unterschiedlichen Wärmedehnungen von Maschinenbett und Maßstabträger 3 eine geringe Verstellung des Maßstabträgers 3 mit Ausnahme an der Festlagerstelle in Trägerlängsrichtung zulassen. Zu diesem Zweck sind bei jeder Befestigungsstelle 9 aus dem Träger 5 selbst Ausgleichseinrichtungen herausgearbeitet. Wie die Fig. 1 und 2 zeigen, wird zur Schaffung dieser Ausgleichseinrichtungen von der einen Seite des Maßstabträgers 3 her eine Vertiefung 10 eingefräst und von der anderen Seite (jeweils der Vorder- oder Rückseite) werden zu beiden Seiten dieser Vertiefung 10 Vertikalschlitze 11 angebracht, die unten in einen Horizontalschlitz 12 übergehen, der über die gesamte Querbreite des Trägers 5 reicht. Dadurch entsteht bei der Ausgleichseinrichtung ein Mittelteil 13, der eine Durchführungsöffnung 14 für eine Befestigungsschraube erhält und der über stegartige Ansätze 15, die durch die Vertiefung 10 und die Einschnitte 11 bestimmt sind, in das volle Trägermaterial übergeht, wobei der Träger 5 selbst im Anbringungsbereich jeder Befestigungsstelle 9 eine wesentliche Materialschwächung erfährt. Die Stege 15 lassen nur Längsverstellungen des Maßstabträgers 3, aber keine Auslenkungen des Maßstabträgers quer zur dieser Längsrichtung zu.

In den Endabschlußblöcken 6, von denen in Fig. 1 nur einer dargestellt wurde, ist mittig eine Langlochöffnung 16 für die Aufnahme einer hier zur Lagestabilisierung im Durchführungsbereich einen Schaft mit angepaßt länglichem Querschnitt aufweisenden Schraube angebracht, wobei an den Längsenden der Langlochöffnung 6 zur Drehsicherung die Öffnung zu einem Mehrkantprofil 17 erweitert ist, in das ein entsprechender Schraubenkopf bzw. an der anderen Seite ein auf die Schraube aufschiebbarer mutternartiger Körper paßt. Um den die Öffnungen 16 bzw. 17 aufweisenden Mittelteil 18 sind oben und unten durchgehende und damit diesen Mittelbereich freistellende Schlitze 19 angebracht. Ferner sind von der Vorderseite her Vertikalschlitze 20 angebracht, die bis kurz vor der Rückwand des Blockes 6 reichen und im Abstand von diesen Schlitzen 20 sind von der Rückseite her Vertikalschlitze 21 angebracht, die kurz vor der Vorderwand enden, so daß diese Schlitze 20, 21 wieder im wesentlichen querverlaufende Stege 22 bestimmen, die oben und unten durch die Schlitze 19 freigestellt sind und die über den Innenrand der Schlitze 20 in den Mittelteil 18 und über den Innenrand der Schlitze 21 in das Material des Körpers 6 übergehen. Somit ermöglichen die Schlitze 19 - 21 und die durch sie gebildeten Stege 22 eine Längsverstellung des Blockkörpers 6 gegenüber der durch die Öffnung 16 eingeführten Befestigungsschraube und dem Mittelteil 18.

Wie sich aus den Fig. 6 und 7 ergibt, ist zur Befestigung des Maßstabkörpers 1 im Trägerteil 5 des Maßstabträgers 3 eine Aufnahmenut 23 vorgesehen, in die der Maßstabkörper 1 mit dem einen Längsrandbereich eingreift. Dieser Maßstabkörper 1 kann, wie dargestellt, nur im Bereich der einen Längsseite an der zugeordneten Nutflanke befestigt sein, es sind aber auch Ausführungen möglich, bei denen eine Befestigung an beiden Nutflanken vorgesehen wird. Für die Befestigung wird ein Laminatstreifen 24 verwendet, dessen näherer Aufbau aus Fig. 7 ersichtlich ist. Dieser Laminatstreifen besteht aus einem Metallstreifen 25 aus Material, z.B. Stahl, das einen ähnlichen Wärmedehnungskoeffizienten wie der Glaskörper 1 aufweist und aus zwei gummielastischen Laminatstreifen 26, 27, z.B. aus Silikongummi, die über Kleberschichten mit dem Metallstreifen 25 und der Nutflanke bzw. dem zu ihnen weisenden Rand des Maßstabes 1 verbunden sind. Der Metallstreifen 25 bildet eine Bewehrung, die zumindest den Großteil der bei unterschiedlichen Wärmedehnungen des Maßstabträgers 3 gegenüber dem Maßstab 1 auftretenden, über die Schicht 26 wirksam werdenden Spannungen abfängt, so daß wegen der annähernd gleichen Wärmedehnung des Maßstabkörpers 1 und des Metallstreifens 25 nur vernachlässigbar kleine Spannungen im Streifenbereich 27 auftreten und die Wärmedehnungskräfte vom Maßstabkörper 1 abgehalten werden.

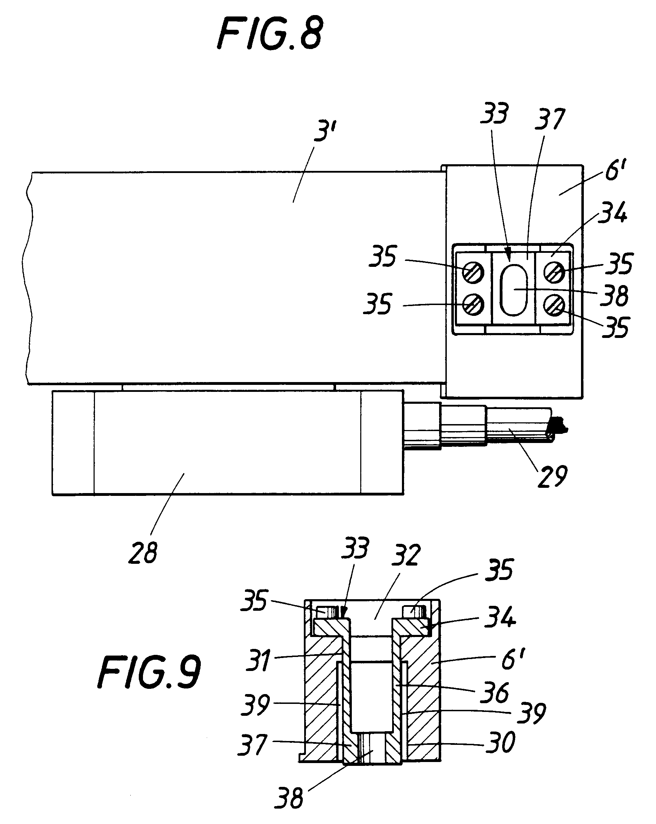

Bei der Ausführungsvariante des Längenmeßsystems nach den Fig. 8 und 9 wurden die dem System nach den Fig. 1 und 2 entsprechenden Teile mit gleichen, durch einen Strich unterscheidbaren Bezugszelchen versehen. Durch den dem Schlitz 4 entsprechenden Schlitz ragt ein Mitnehmer für eine entlang des Maßstabes verstellbar geführte, nicht dargestellte Abtasteinheit hindurch, welcher Mitnehmer an einem Befestigungsblock 28 sitzt. Das Schutzgehäuse 3′ kann mit einem feststehenden Maschinenteil und der Teil 28 mit einem anderen Maschinenteil, dessen Relativbewegung zu Teil 3′ zu messen ist, verbunden sein. Aus dem Tell 28 führt ein Anschlußkabel 29 zur Übermittlung von Meßdaten zu einer Auswertungseinheit heraus. Die bisher beschriebene Anordnung ist wieder an sich bekannt. Für die Befestigung des Meßsystems, z.B. am Bett einer Maschine, sind Befestigungsschrauben (nicht dargestellt) vorgesehen, mit deren Hilfe das Meßsystem an den Endabschlußblöcken 6′ befestigt werden kann. Bei langen Meßsystemen kann man auch den Maßstabträger 3′ an Zwischenstellen über in Längsrichtung nachgiebige Halterungen, z.B. entsprechend Fig. 1 und 2, befestigen.

Um hier bei unterschiedlichen Wärmedehnungen von Objekt, Maßstab und Maßstabträger 3′ einen Längenausgleich zu ermöglichen, ist eine besondere Befestigungsart für die Endabschlußblöcke 6′ vorgesehen. Diese Abschlußblöcke 6′ sind mit in ihrer Grundform einen rechteckigen Querschnitt aufweisenden Ausnehmungen 30 ausgestattet, die im unteren Bereich eine bestimmte Größe aufweisen, dann in einen im lichten Querschnitt verringerten abgesetzten Teil 31 übergehen und schließlich in einer Einsatzvertiefung 32 auslaufen.

In die Ausnehmung 30 ist ein Einsatzteil 33 eingesetzt, der in der Grundform ein Hutprofil mit versenkt in der Einsatzvertiefung montierten Endflanschen 34 (Befestigung durch Schrauben 35) an diese Flansche 34 anschließenden Längsstegen 36 und schließlich einen wieder verdickten Mittelteil 37 besitzt. Im Mittelteil 37 ist ein Langloch 38 für die Durchführung der Befestigungsschraube angebracht. Der Einsatzteil 33 liegt nur in dem unmittelbar an die Befestigungsflansche 34 anschließenden Längsbereich seiner Seitenstege 36 an den Absätzen 30 an und kann aber auch mit den vorderen und hinteren Rändern der Stege 36 in der Ausnehmung anliegen bzw. einen nach Fig. 8 nach oben und unten bzw. nach Fig. 9 nach vorne und hinten verlängerten Steg zur Führung an den Längsseitenwänden der Ausnehmung 30 aufweisen. Im übrigen Bereich der Ausnehmung 30 bleiben vorne und hinten Spalte 30 frei, so daß unterschiedliche Wärmedehnungen unter federnder Biegung der Stege 36 aufgenommen werden.

Nach einer Ausführungsvariante könnte der Einsatzteil 33 durch eine etwa die gleiche Längsschnittform aufweisende, im Querschnitt längliche Hülse ersetzt werden.

## Patentansprüche

1. Längenmeßsystem mit einem Maßstab (1) und einer relativ zu ihm über seine Länge verstellbaren Abtasteinheit, wobei der Maßstab (1) in einem zugleich ein rohrförmiges Schutzgehäuse (3, 3′) für Maßstab und Abtasteinheit bildenden Maßstabträger über eine eine relative Längsverstellung zulassende Verbindung (24 - 27) befestigt ist, wobei der Maßstabträger (3, 3′) wenigstens im Bereich von Endabschlußblöcken (6, 6′) mit Anbringungsstellen (14, 16, 38) für eine Verbindung mit einem Objekt, z.B. dem Bett einer Maschine, herstellende Schrauben versehen ist und wobei im Bereich von Anbringungsstellen Ausgleichseinrichtungen (9, 17, 33) zum Längenausgleich bei unterschiedlicher Wärmedehnung von Objekt, Maßstab (1) und Maßstabträger (3, 3′) vorgesehen sind, dadurch gekennzeichnet, daß die Ausgleichseinrichtungen (9, 17, 33) je einen Mittelteil (13, 18, 37) mit einer Durchführungsöffnung (14, 16, 38) für die jeweilige Schraube und an diese beidseits anschließende Haltestege (15, 22, 36) aufweisen, die in Aufnahmevertiefungen (11, 12, 20, 21, 39) des Maßstabträgers (3, 3′) und bzw. oder der Endabschlußblöcke (6, 6′) des Maßstabträgers im wesentlichen quer zur Trägerlängsrichtung und wenigstens im Großteil ihrer Länge mit Spielabstand von der jeweiligen Schraube und von der Vertiefungswandung angebracht sind und mit ihren Enden am Maßstabträger (3, 3′) bzw. Endabschlußblock (6, 6′) angreifen und die in Längsrichtung des Maßstabträgers (3, 3′) gesehen eine relativ geringe, quer zur Längsrichtung aber eine relativ hohe Biegesteifigkeit aufweisen.

2. Längenmeßsystem nach Anspruch 1, dadurch gekennzeichnet, daß die Ausgleichseinrichtungen (9, 17) durch von gegenüberliegenden Seiten her im Maßstabträger (3, 3′) und bzw. oder den Endabschlußblöcken (6, 6′) angebrachte Einschnitte (11, 12, 19 - 21) und Vertiefungen (10) unmittelbar aus dem Maßstabträger (3) und bzw. oder aus den über die Enden dieses Maßstabträgers überstehenden Endabschlußblöcken (6) herausgearbeitet sind und mit den Enden ihrer Haltestege (15, 22) in das volle Material des Maßstabträgers (3) bzw. Endabschlußblockes (6) übergehen.

3. Längenmeßsystem nach den Ansprüchen 1 und 2, dadurch gekennzeichnet, daß die Haltestege (15, 22) durch quer zur Längsrichtung geführte, an der Vorder- und Rückseite des Trägers (3) bzw. Blockes (6) um die Stegbreite versetzte Einschnitte (10, 11, 20, 21) gebildet und durch Längseinschnitte (12, 19) zumindest im wesentlichen vom übrigen Träger- bzw. Blockmaterial freigestellt sind.

4. Längenmeßsystem nach einem der Anspruche 1 - 3, dadurch gekennzeichnet, daß die die Ausgleichseinrichtungen (9) bestimmenden Einschnitte (11) und Vertiefungen (10) Schwachstellen in einer zu einem Träger (5) für den Maßstab (1) verdickten Wand des rohrförmigen Schutzgehäuses (3) bestimmen.

5. Längenmeßsystem nach Anspruch 1, dadurch gekennzeichnet, daß bei den Ausgleichseinrichtungen (33) aus Mittelteil (37) und Haltestegen (36) ein Hutprofil gebildet ist und diese Hutprofile als federnde Einsatzteile (33) oder Einsatzhülsen in eine angepaffte Aufnahmeöffnung (30, 31) der Endabschlußblöcke (6′) einsteckbar sind, wobei der Mittelteil (37) mit Spiel in Trägerkörperlängsrichtung in die Aufnahmeöffnung (30) eingreift.

6. Längenmeßsystem nach Anspruch 5, dadurch gekennzeichnet, daß die Einsatzteile mit in Längsrichtung des Trägerkörpers gerichteten Flanschen (34) versenkt im Endabschlußblock (6′) befestigt sind und mit den anschließenden Stegen des Profiles am Rand (31) der Einsatzöffnung (30) anliegen und die Einsatzöffnung von diesem Anlagebereich ausgehend an den zu den Flachseiten der Stege (36) gerichteten Seiten Bewegungsspalte (39) für diese Stege freiläßt, wobei die Durchführungsöffnung (38) für die Befestigungsschraube an dem die Stege (36) verbindenden Mittelteil (37) des Einsatzteiles (33) vorgesehen und als quer zur Meßrichtung und parallel zu den Stegen (36) verlaufendes Langloch ausgebildet ist.

7. Längenmeßsystem nach Anspruch 6, dadurch gekennzeichnet daß der Mittelteil (37) des Einsatzteiles (33) zu einem im wesentlichen biegesteifen Körper verdickt ist.

8. Längenmeßsystem nach Anspruch 5, dadurch gekennzeichnet, daß der Einsatzteil (33) als Einsatzhülse ausgebildet ist, die einen länglichen Querschnitt aufweist, an einem Längsende mit Halteflanschen versenkt im Randbereich der Aufnahmeöffnung befestigt ist und im Bereich des anderen Endes eine gegenüber der übrigen Hülsenlichtweite im Durchmesser verringerte Durchführungsöffnung für eine Befestigungsschraube aufweist.

9. Längenmeßsystem nach einem der Anspruche 1 - 8, dadurch gekennzeichnet, daß als Verbindung für den mit einem Rand in eine breiter als seine Dicke ausgebildete Nut (23) eingreifenden, aus einem Glaskörper bestehenden Maßstab (1) mit dem Maßstabträger (3) ein am Maßstab (1) und an der Nutwandung haftender Befestigungskörper (24) vorgesehen ist, der aus gummielastischem Material besteht und zwischen der Haftfläche für die Nutwand und der Haftfläche für den Maßstabkörper eine über die Länge durchlaufende Bewehrungseinlage (25) aus einem eine ähnliche Wärmedehnungszahl wie der Maßstab selbst aufweisenden Material enthält.

10. Längenmeßsystem nach Anspruch 9, dadurch gekennzeichnet, daß der Befestigungskörper (24) als Laminatstreifen ausgebildet ist, bei dem ein Metallstreifen (25) mit niedriger Wärmedehnungszahl, insbesondere aus Stahl, beidseitig eine Auflage (26, 27) aus gummielastischem Material, insbesondere Silikongummi trägt, die ihrerseits direkt oder über eine Klebeschicht mit der Nutwand bzw. dem Maßstabkörper (1) haftend verbindbar ist.

## Claims

1. A length measuring system comprising a rule (1) and a scanning unit displaceable relatively thereto over its length, the rule (1) being secured, by way of a connection (24 - 27) allowing a relative longitudinal displacement, in a rule carrier which at the same time forms a tubular protective housing (3, 3′) for the rule and scanning unit, the rule carrier (3, 3′) being provided - at least in the region of end closure blocks (6, 6′) - with mounting points (14, 16, 38) for screws which provide a connection to an object, e.g. the bed of a machine, and compensating means (9, 17, 33) being provided, in the region of the mounting points, for length compensation in the event of different thermal expansion of the object, rule (1) and rule carrier (3, 3′), characterised in that the compensating means (9, 17, 33) each comprise a middle part (13, 18, 37) with a passage aperture (14, 16, 38) for the associated screw and retaining webs (15, 22, 36) adjoining either side thereof, said retaining webs being disposed in receiving recesses (11, 12, 20, 21, 39) of the rule carrier (3, 3′) and/or the end closure blocks (6, 6′) of the rule carrier substantially transversely to the longitudinal direction of the carrier and, at least over the majority of their length, with a clearance from the associated screw and from the recess wall and engaging the rule carrier (3, 3′) or end closure block (6, 6′) by their ends and having relatively low flexural rigidity as considered in the longitudinal direction of the rule carrier (3, 3′) and relatively high flexural rigidity as considered transversely of such direction.

2. A length measuring system according to claim 1, characterised in that the compensating means (9, 17) are formed directly out of the rule carrier (3) by recesses (10) and incisions (11, 12, 19 - 21) made from opposite sides in the rule carrier (3, 3′ and/or the end closure blocks (6, 6′) and/or out of the end closure blocks (6) projecting beyond the ends of said rule carrier and merge by the ends of their retaining webs (15, 22) into the solid material of the rule carrier (3) or end closure block (6).

3. A length measuring system according to claims 1 and 2, characterised in that the retaining webs (15, 22) are formed by incisions (10, 11, 20, 21) offset by the web width at the front and rear of the carrier (3) or block (6) and extending transversely of the longitudinal direction and are at least substantially free from the rest of the carrier or block material by longitudinal incisions (12, 19).

4. A length measuring system according to any one of claims 1 to 3, characterised in that the recesses (10) and incisions (11) defining the compensating means (9) define weak points in a wall of the tubular protective housing (3), such wall being thickened to form a carrier (5) for the rule (1).

5. A length measuring system according to claim 1, characterised in that the compensating means (33) consisting of a middle part (37) and retaining webs (36) are formed with a hat section and said hat sections are insertable in the form of resilient inserts (33) or insert sleeves into a matching receiving aperture (30, 31) in the end closure blocks (6′), the middle part (37) engaging in the receiving aperture (30) with clearance in the longitudinal direction of the carrier body.

6. A length measuring system according to claim 5, characterised in that the inserts are secured by flanges (34) extending in the longitudinal direction of the carrier body, so as to be countersunk in the end closure block (6′) and bear by the adjoining webs of the section against the edge (31) of the insert aperture (30) and the latter, starting from this contact zone, leaves movement gaps (39) free for said webs at places extending towards the flat sides of the webs (36), the passage aperture (38) for the fixing screw being provided on the middle part (37) of the insert (33) connecting the webs (36) and being formed as a slot extending transversely to the direction of measurement and parallel to the webs (36).

7. A length measuring system according to claim 6, characterised in that the middle part (37) of the insert (33) is thickened to form a substantially flexurally rigid body.

8. A length measuring system according to claim 5, characterised in that the insert (33) is constructed as an insert sleeve of elongate cross-section, is secured at one longitudinal end by retaining flanges so as to be countersunk in the edge zone of the receiving aperture and has, in the region of the other end, a passage aperture for a fixing screw, such passage aperture being of reduced diameter compared with the remaining sleeve inside diameter.

9. A length measuring system according to any one of claims 1 to 8, characterised in that the connection between the rule (1) consisting of a glass member engaging by one edge in a groove (23) wider than its thickness, and the rule carrier (3), is a fixing member (24) adhering to the rule (1) and to the groove wall, such member consisting of elastomeric material and containing, between the adhesion surface for the groove wall and the adhesion surface for the rule body, a reinforcing insert (25) extending over the length and consisting of a material having a similar coefficient of thermal expansion to the rule itself.

10. A length measuring system according to claim 9, characterised in that the fixing member (24) is formed as a laminate strip wherein a metal strip (25) of low coefficient of thermal expansion, more particularly of steel, has on both sides a coating (26, 27) of elastomeric material, more particularly silicone rubber, which is in turn connectable adhesively to the groove wall or the rule body (1) either directly or via an adhesive layer.

## Revendications

1. Système de mesure de longueur, comportant une règle graduée (1) et une unité d'exploration, réglable sur sa longueur, la règle graduée (1) étant fixée dans un support de règle graduée, constituant simultanément un boîtier tubulaire (3, 3′) de protection pour la règle graduée et l'unité d'exploration, la fixation ayant lieu par l'intermédiaire d'une liaison (24 à 27) admettant un réglage relatif en longueur, le support (3, 3′) de règle de mesure étant muni, au moins dans la zone des blocs (6, 6′) de délimitation d'extrémité, de vis établissant des points de montage (14, 16, 38) destinés à une liaison à un objet, par exemple le banc d'une machine, et dans la zone des points de montage étant prévus des dispositifs de compensation (9, 17, 33), destinés à effectuer une compensation de longueur en cas de différence dans les dilatations thermiques intervenues sur l'objet, la règle graduée (1) et le support (3, 3′) de règle graduée ,
caractérisé en ce que les dispositifs de compensation (9, 17, 33) présentent chacun une partie médiane (13, 18, 37), avec une ouverture de passage (14, 16, 38) pour la vis afférente et des nervures de maintien (15, 22, 36), s'y raccordant de part et d'autre, et réalisées dans des creusures de réception (11, 12, 20, 21, 39) du support (3, 3′) de règle graduée et/ou des blocs (6, 6′) de délimitation d'extrémité du support de règle graduée, les nervures de maintien étant orientées en direction sensiblement transversale par rapport à la direction longitudinale du support et présentant, au moins sur une grande partie de leur longueur, un espacement de jeu par rapport à la vis afférente et par rapport à la paroi de la creusure, et agissant, par leurs extrémités, sur le support (3, 3′) de règle graduée, respectivement le bloc (6, 6′) de délimitation d'extrémité et présentant, en observant dans la direction longitudinale du support (3, 3′) de règle graduée une rigidité en flexion relativement faible, mais qui est relativement élevée dans la direction transversale par rapport à la direction longitudinale.

2. Système de mesure de longueur selon la revendication 1,
caractérisé en ce que les dispositifs (9, 17) de compensation sont façonnés par enlèvement de matière, en creusant des entailles (11, 12, 19 à 21) et des cavités (10), depuis les deux faces opposées, dans le support (3, 3′) de règle graduée ou les blocs (6, 6′) de délimitation d'extrémité, directement à partir du support (3) de règle graduée et/ou les blocs (6) de délimitation d'extrémité faisant saillie sur les extrémités de ce support de règle graduée et se transformant, par les extrémités de leurs nervures de maintien (15, 22), en une masse de matière massive du support (3) de règle graduée ou du bloc (6) de délimitation d'extrémité.

3. Système de mesure de longueur selon les revendications 1 et 2,
caractérisé en ce que les nervures de maintien (15, 22) sont constituée par des entailles (10, 11, 20, 21) tracées transversalement par rapport à la direction longitudinale et décalées de la largeur de la nervure, selon qu'elles se trouvent en face avant et arrière du support (3) ou du bloc (6) et sont dégagées au moins pratiquement du reste du matériau du support ou du bloc, au moyen d'entailles longitudinales (12, 19).

4. Système de mesure de longueur selon l'une des revendications 1 à 3,
caractérisé en ce que les entailles (11) et les cavités (10) constituant les dispositifs de compensation (9) déterminent des points faibles dans une paroi, épaissie afin de constituer un support (5) pour la règle graduée (1), du coté de protection (3) tubulaire.

5. Système de mesure de longueur selon la revendication 1,
caractérisé en ce que, lorsque les dispositifs de compensation (33) sont composés d'une partie médiane (37) et de nervures de maintien (36), il est constitué un profil en chapeau et que ces profils en chapeau peuvent être emboîtés, sous forme de parties d'insert (33) ou de douilles d'insert élastique, dans une ouverture de réception (30, 31) adaptée de bloc (6′) de délimitation d'extrémité , la partie médiane (37) s'engageant avec du jeu dans la direction longitudinale du corps de support, dans l'ouverture de logement (30).

6. Système de mesure de longueur selon la revendication 5,
caractérisé en ce que les parties d'insert sont fixées, noyées dans le bloc (6′) de délimitation d'extrémité à l'aide de rebords (34) orientés dans la direction longitudinale du corps de support et appuient, par les nervures connexes du profil, sur le bord (31) de l'ouverture d'introduction (30) et l'ouverture d'introduction dégageant pour ces nervures, en partant de cette zone d'appui, sur les faces orientées vers les cotés plats des nervures (36), des interstices de déplacement (39) destinés aux nervures, l'ouverture de passage (38), destinée à la vis de fixation, étant prévue sur la partie médiane (37), reliant les nervures (36), de la partie d'insert (33) et réalisée sous forme de trou oblong, s'étendant transversalement par rapport à la direction de mesure et parallèlement aux nervures (36).

7. Système de mesure de longueur selon la revendication 6,
caractérisé en ce que la partie médiane (37) de la partie d'insert (33) est épaissie pour constituer un corps pratiquement rigide en flexion.

8. Système de mesure de longueur selon la revendication 5,
caractérisé en ce que la partie d'insert (33) est réalisée sous forme de douille d'insert, présentant une section transversale allongée, fixée dans la zone de bordure de l'ouverture de réception sur une extrémité longitudinale, de façon noyée, avec des rebords de maintien et présentant dans la zone de l'autre extrémité une ouverture de passage, dont le diamètre est réduit par rapport au reste de l'ouverture ménagée dans la douille pour une vis de fixation.

9. Système de mesure de longueur selon l'une des revendications 1 à 8,
caractérisé en ce qu'un corps de fixation (24), adhérant à la règle graduée et à la paroi de rainure, est prévu comme liaison pour la règle graduée (1), constitué d'un corps de verre et s'engageant, par un bord, dans une rainure (23) plus large que son épaisseur, et avec le support (3) de règle graduée, le corps de fixation (24) étant constitué d'un matériau ayant l'élasticité du caoutchouc et contenant, entre la surface d'adhérence pour la paroi de rainure et la surface d'adhérence pour le corps de règle graduée, une garniture d'armature (25), faisant toute la longueur et constituée d'un matériau présentant un coefficient de dilatation thermique analogue à celui de la règle graduée proprement dite.

10. Système de mesure de longueur selon la revendication 9,
caractérisé en ce que le corps de fixation (24) est réalisé sous forme de bande stratifiée, pour laquelle une bande métallique (25) ayant un coefficient de dilatation thermique inférieur, en particulier en acier, porte sur ses deux faces un revêtement (26, 27) réalisé en un matériau ayant l'élasticité du caoutchouc, en particulier en caoutchouc au silicone, pouvant être relié avec adhérence de son coté à la paroi de rainure ou au corps de règle graduée (1), soit directement, soit par l'intermédiaire d'une couche adhésive.
